# EUROPÄISCHE PATENTANMELDUNG

(11) **EP 1 075 922 A1**
(43) Veröffentlichungstag der Anmeldung: **14.02.2001**
(21) Anmeldenummer: 00114454.2
(22) Anmeldetag: 05.07.2000
(51) Int. Cl.: B29C 47/60

(54) **Schnecke mit verschleissgeschütztem Schnecksteg und Verfahren zu deren Herstellung**

(30) Priorität: 22.07.1999 DE 19934343
(71) Anmelder: Arenz GmbH, 53340 Meckenheim (DE)
(72) Erfinder: Arenz, Helmut, 53343 Wachtberg (DE); Arenz, Reiner, 53340 Meckenheim (DE)
(74) Vertreter: Grünecker, Kinkeldey, Stockmair & Schwanhäusser Anwaltssozietät

(57) **Zusammenfassung**

Die Erfindung betrifft eine Schnecke, insbesondere Extruder- oder Plastifizierschnecke, mit einem verschleißgeschützten Schneckensteg. Diese Schnecke zeichnet sich dadurch aus, daß dieser verschleißgeschützte Schneckensteg wenigstens einen verschleißbeständigen Bereich (1) und wenigstens einen spannungsausgleichenden Bereich (2) aufweist. Die Erfindung betrifft ferner ein Verfahren zum Herstellen einer solchen Schnecke.

## Beschreibung

Die vorliegende Erfindung betrifft eine Schnecke für Kunststoffverarbeitungsmaschinen der im Oberbegriff des Anspruchs 1 genannten Art. Ferner betrifft die Erfindung ein Verfahren zur Herstellung einer solchen Schnecke.

In Kunststoffverarbeitungsmaschinen eingesetzte Schnecken, insbesondere Extruder- und Spritzgußplastifizierschnecken, unterliegen im Betrieb einem starken Verschleiß durch die Kunststoffschmelze sowie durch die direkte Reibung an der Wandung des Schneckenzylinders, in dem die Schnecke aufgenommen ist. Die höchste Verschleißbelastung einer solchen Schnecke tritt am Kopf des Schneckensteges auf.

Aus der DE-OS 37 40 916 sowie aus der DE 39 43 344 C1 ist bereits eine Schnecke für die Kunststoffverarbeitung bekannt, bei der auf dem Kopf des Schneckenstegs eine Schutzschicht aus einer verschleißbeständigen Legierung aufgetragen ist, wobei die Schutzschicht durch Schweißen oder Laserstrahlbehandlung in die Oberfläche des Schneckensteges eingeschmolzen ist.

Nachteilhaft bei diesen bekannten Verfahren ist, daß es aufgrund der unterschiedlichen Wärmeausdehnung zwischen dem Werkstoff des Schneckensteges und dem Werkstoff der Verschleißschutzschicht zu Rißbildungen in der Schicht kommen kann. Diese Risse führen insbesondere bei der Verarbeitung von Materialien mit hellen Farben oder bei Materialwechseln durch ausgetragene Partikel zu Farbschlieren in der Kunststoffschmelze. Darüber hinaus kann es aufgrund der Risse zu einer Zersetzung der Kunststoffe kommen, was sich nachteilhaft auf das Kunststofformteil sowie auf die Schnecke auswirkt. Insbesondere die Schnecke kann je nach verwendeter Kunststoffart durch die entstehenden Zersetzungsprodukt angegriffen und zerstört werden.

Eine Aufgabe der Erfindung besteht darin, eine Schnecke für Kunststoffverarbeitungsmaschinen zu schaffen, die dauerhaft verschleißbeständig ist. Ferner besteht eine Aufgabe der Erfindung dann, ein Verfahren zur Herstellung einer solchen Schnecke anzugeben.

Diese Aufgaben werden erfindungsgemäß durch eine Schnecke gemäß Patentanspruch 1 und durch ein Verfahren gemäß Patentanspruch 14 gelöst.

Ein Vorteil der Erfindung besteht darin, durch die erhöhte Lebensdauer der Schnecke die Produktionskosten senken zu können.

Vorteilhafte Ausgestaltungen der Erfindung sind in den Unteransprüchen angegeben.

Die verschleißbeständigen und spannungsausgleichenden Bereiche des Schneckensteges können bevorzugt abschnittsweise wechselnd angeordnet werden. Ferner kann entlang des Schneckensteges wenigstens ein verschleißbeständiger Bereich parallel zu wenigstens einem spannungsausgleichenden Bereich verlaufen. In vorteilhafter Weise können wenigstens zwei entlang des Schneckensteges verlaufende Bereiche nebeneinander und versetzt zueinander angeordnet sein. Diese verschiedenen möglichen Anordnungsformen der verschleißbeständigen und spannungsausgleichenden Bereiche können vorteilhafterweise unterschiedlichen Belastungszuständen sowie unterschiedlichen Produktionsmöglichkeiten angepaßt werden.

In bevorzugter Weise können die verschleißbeständigen Bereiche aus harten Werkstoffen, insbesondere aus Stählen, Hartmetallen oder Nickellegierungen mit Zuschlägen von Molybdän, Chrom, Mangan, Silicium, Eisen und dergleichen, gebildet sein. Die spannungsausgleichenden Bereiche können aus zähen Werkstoffen, insbesondere aus austenitischen Stählen oder eisenfreien Werkstoffen, gebildet sein. Die Verwendung der genannten harten Werkstoffe für die verschleißbeständigen Bereiche gewährleistet den erwünschten Verschleißschutz des Schneckensteges, während die Verwendung der genannten zähen Werkstoffe thermisch oder mechanisch verursachte Spannungen abbaut und die Rißbildung verhindert.

Vorteilhafterweise sind die verschleißbeständigen und spannungsausgleichenden Bereiche als Schichten auf einem Kopf des Schneckensteges ausgebildet. In einer weiteren Ausführungsform kann zwischen dem Schneckenstegkopf und den verschleißbeständigen und spannungsausgleichenden Schichten eine weitere Schicht als Puffer und Aufbauschicht vorgesehen sein. Diese weitere Schicht kann aus einem metallischen Werkstoff bestehen. Die Ausbildung der verschleißbeständigen und spannungsausgleichenden Bereiche als Schichten ermöglicht den Einsatz bewährter Techniken zur Aufbringung von Verschleißschutzschichten. Das Vorsehen einer Puffer- und Aufbauschicht erhöht weiter die Haftfestigkeit zwischen dem Schneckenstegkopf und den verschleißbeständigen und spannungsausgleichenden Schichten. Ferner baut die Puffer- und Aufbauschicht auftretende Spannungen weiter ab.

In einer weiteren Ausführungsform können die verschleißbeständigen und spannungsausgleichenden Bereiche in einer Nut angeordnet sein, die im Kopf des Schneckensteges ausgebildet ist. Dadurch wird eine verbesserte Verankerung der verschleißbeständigen und spannungsausgleichenden Bereiche im Schneckenstegkopf erreicht.

In einer weiteren Ausführungsform kann der spannungsausgleichende Bereich der Schneckensteg selbst sein, in dessen Kopf mehrere Ausnehmungen gebildet sind, in denen die verschleißbeständigen Bereiche angeordnet sind. Auf diese Weise läßt sich der Herstellungsprozeß vereinfachen.

Die Schnecke kann zumindest in einem Längenabschnitt zwei- oder mehrgängig sein. Ferner kann in zumindest einem Längenabschnitt der Schnecke eine Barrierezone vorgesehen sein.

Eine weitere Verbesserung des erfindungsgemäßen Verfahrens läßt sich erzielen, indem wenigstens der Schneckensteg durch Ionisieren, Nitrieren, Härten, Vakuumhärten, Molybdänbeschichten oder Verchromen oberflächenbehandelt wird.

In einer weiteren Ausführungsform des Verfahrens kann im Kopf des Schneckensteges eine Nut ausgebildet werden, in der die verschleißbeständigen und spannungsausgleichenden Bereiche angeordnet werden. Vorteilhafterweise wird diese Nut abwechselnd abschnittsweise mit harten und weichen Werkstoffen ausgefüllt.

In einer anderen bevorzugten Ausführungsform wird der Schneckensteg als spannungsausgleichender Bereich aus dem zähen Werkstoff hergestellt, wobei in den Kopf des Schneckensteges Ausnehmungen eingebracht werden, in denen die verschleißbeständigen Bereiche ausgebildet werden. Die verschleißbeständigen Bereiche können durch Ausfüllen der Ausnehmungen mit dem harten Werkstoff hergestellt werden.

Die Erfindung wird nachstehend anhand von Ausführungsbeispielen und unter Bezug auf die Zeichnung näher beschrieben. In dieser zeigt:
- Fig. 1: eine Seitenansicht einer erfindungsgemäßen Schnecke in einem Schneckenzylinder, wobei der Schneckensteg der erfindungsgemäßen Schnecke teilweise geschnitten ist;
- Fig. 2: einen Schnitt durch eine abgewickelte Schicht aus verschleißbeständigen und spannungsausgleichenden Bereichen;
- Fig. 3: einen Längsschnitt durch einen erfindungsgemäßen Schneckensteg, auf dem verschleißbeständige und spannungsausgleichende Bereiche angeordnet sind;
- Fig. 4: eine Seitenansicht einer erfindungsgemäßen Schnecke mit abschnittsweise wechselnden, verschleißbeständigen und spannungsausgleichenden Bereichen;
- Fig. 5: einen Längsschnitt durch den Schneckensteg einer Schnecke des Standes der Technik;
- Fig. 6: einen Querschnitt durch den erfindungsgemäßen Schneckensteg aus Fig. 4;
- Fig. 7: einen Querschnitt durch den erfindungsgemäßen Schneckensteg mit einer Nut im Kopf des Schneckensteges;
- Fig. 8: eine Ausführungsform der erfindungsgemäßen Schnecke mit versetzt angeordneten Bereichen;
- Fig. 9: eine Ausführungsform der erfindungsgemäßen Schnecke mit parallel angeordneten Bereichen;
- Fig. 10: einen Querschnitt durch den erfindungsgemäßen Schneckensteg mit einer Puffer- und Aufbauschicht und
- Fig. 11: einen Längsschnitt durch einen erfindungsgemäßen Schneckensteg mit Ausnehmungen, in denen die verschleißbeständigen Bereiche ausgebildet sind.

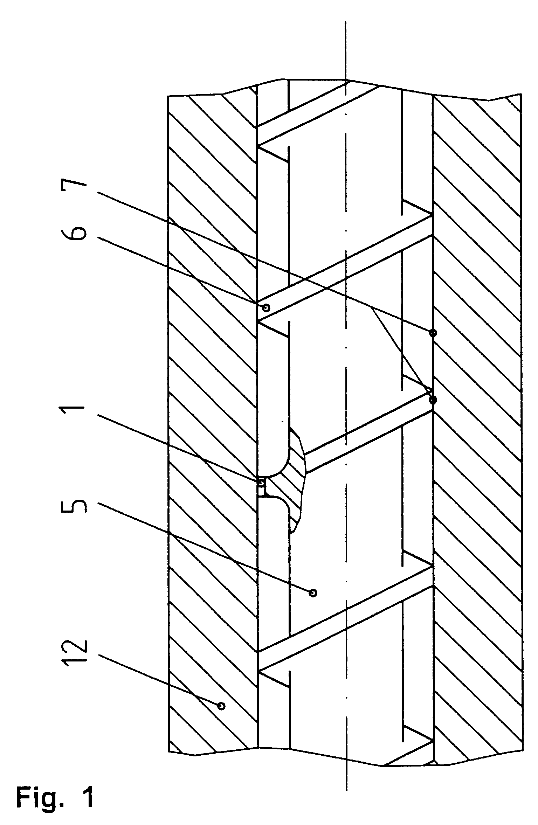

Wie in der Fig. 1 zu sehen, ist eine Schnecke 5 in einem Schneckenzylinder 12 aufgenommen. Die Umfangsoberfläche des Schneckensteges 6 befindet sich in Kontakt mit einer Innenwandung 7 des Schneckenzylinders 12. Wie aus dem Teilschnitt des Schneckensteges 6 ersichtlich, weist der Kopf des Schneckensteges 6 einen verschleißbeständigen Bereich auf, der die Innenwandung 7 des Schneckenzylinders 12 berührt.

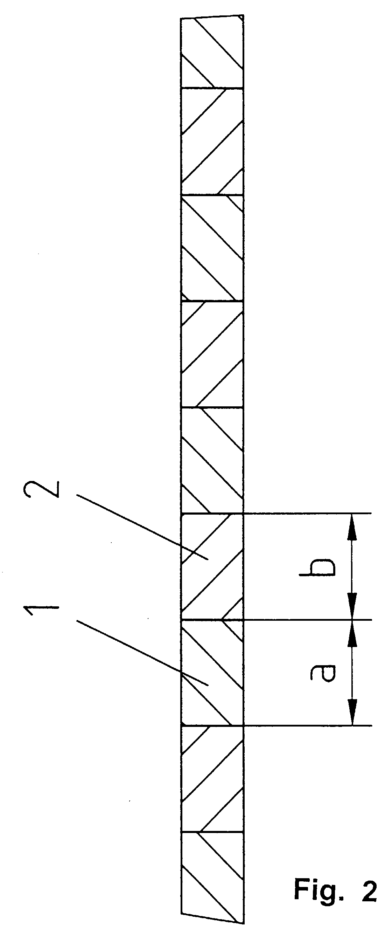

Die Fig. 2 zeigt eine Abwicklung der auf dem Kopf des Schneckensteges 6 aufgebrachten Schicht. Es ist deutlich zu erkennen, daß sich diese Schicht abschnittsweise wechselnd aus verschleißbeständigen Bereichen 1 und spannungsausgleichenden Bereichen 2 zusammensetzt. Die spannungsausgleichenden Bereiche 2 kompensieren thermisch induzierte Längenänderungen der verschleißbeständigen Bereiche 1 durch Verformung. Auf diese Weise werden Spannungen ausgeglichen, die aufgrund der unterschiedlichen Wärmeausdehnung der verschleißbeständigen Bereiche 1 und des Schneckensteges 6 entstehen können. Somit können Risse im verschleißbeständigen Bereich 1 bzw. dessen Abplatzen verhindert werden. Die Längen A und B der beiden Bereiche 1, 2 sind abhängig von den jeweilig verwendeten Werkstoffen sowie von der Größe der Schnecke, auf der die verschleißbeständigen und spannungsausgleichenden Schichten 1, 2 aufgebracht sind. Selbstverständlich ist die Erfindung nicht auf die hier gezeigte Ausführungsform, in der die Längen A, B gleich groß sind, beschränkt. Vielmehr sind alle anderen Längenverhältnisse möglich.

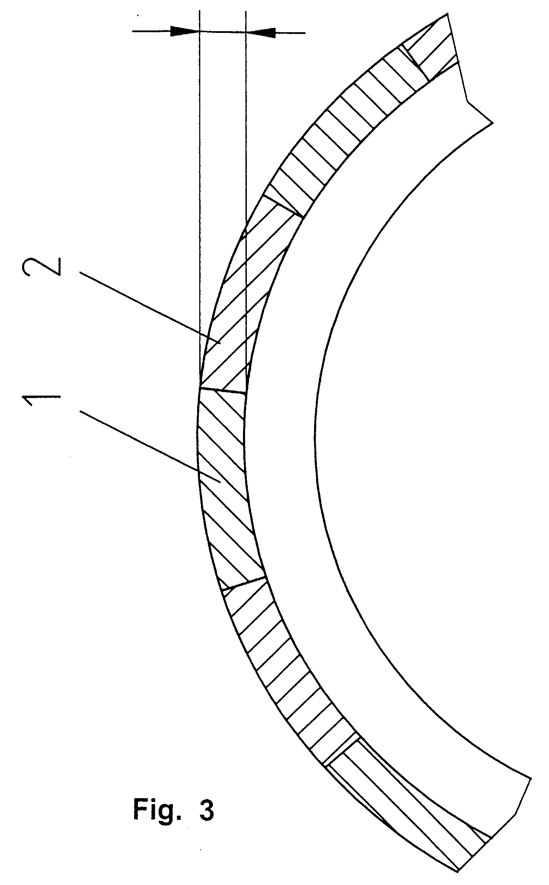

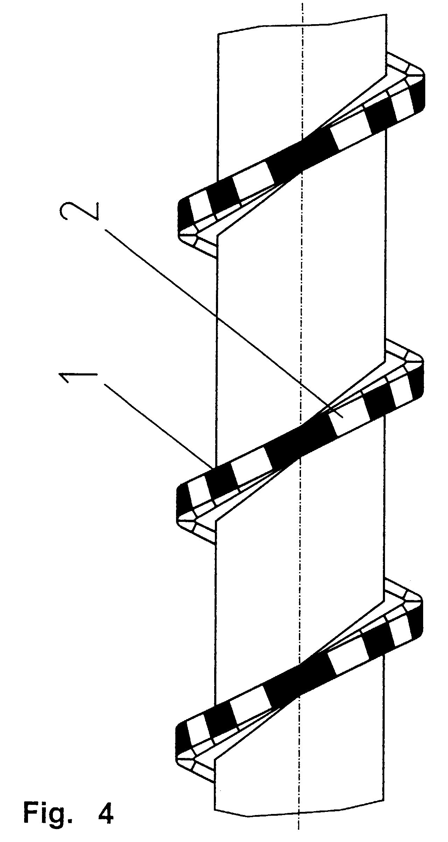

In den Figuren 3 und 4 ist zu sehen, wie die verschleißbeständigen und spannungsausgleichenden Bereiche 1, 2 im Längsschnitt bzw. in einer seitlichen Ansicht auf dem Schneckensteg 6 angeordnet sind. Es versteht sich von selbst, daß die in dieser Ausführungsform der Erfindung gezeigte Anzahl der Bereiche 1, 2 nur beispielhaft ist und jede andere Anzahl möglich ist. Die in der Fig. 3 gezeigte Tiefe c kann in einem Bereich von wenigen µm bis einigen cm liegen.

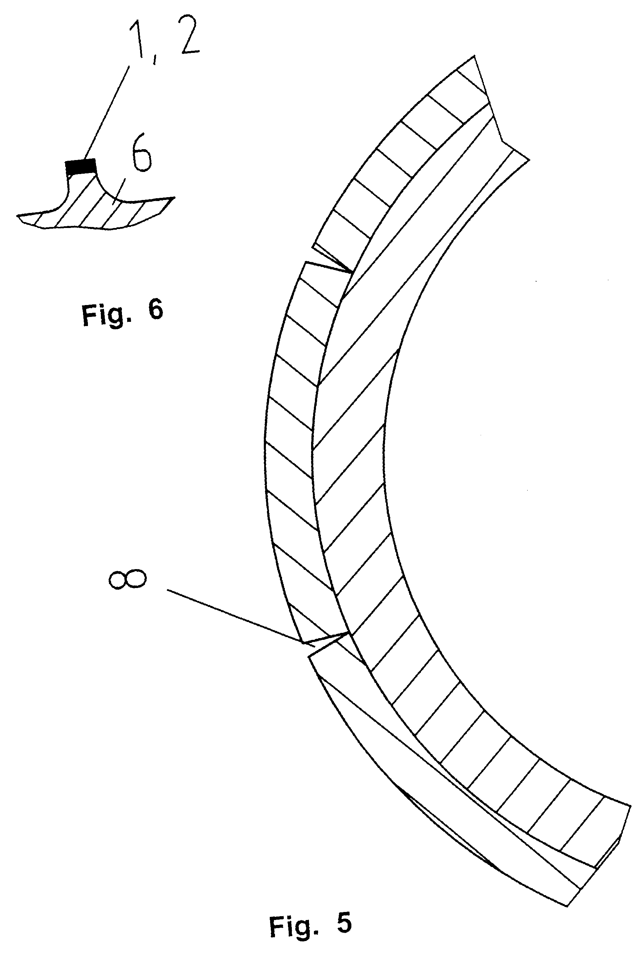

Der in der Fig. 5 gezeigte Längsschnitt stellt einen Schneckensteg aus dem Stand der Technik dar, bei dem die Schutzschicht 1 ohne spannungsausgleichende Schicht 2 auf dem Schneckensteg 6 aufgetragen ist. Der Werkstoff der Schutzschicht 1 hat einen höheren Ausdehnungskoeffizienten als der Werkstoff, aus dem der Schneckensteg 6 hergestellt ist, so daß es nach dem Schweißen und Kühlen durch Schrumpfung zur Rißbildung 8 kommt.

Fig. 6 zeigt einen Querschnitt durch den Schneckensteg 6, in dem zu erkennen ist, daß die verschleißbeständigen und spannungsausgleichenden Bereiche 1, 2 auf dem Kopf des Schneckensteges 6 flächig ausgebildet sind.

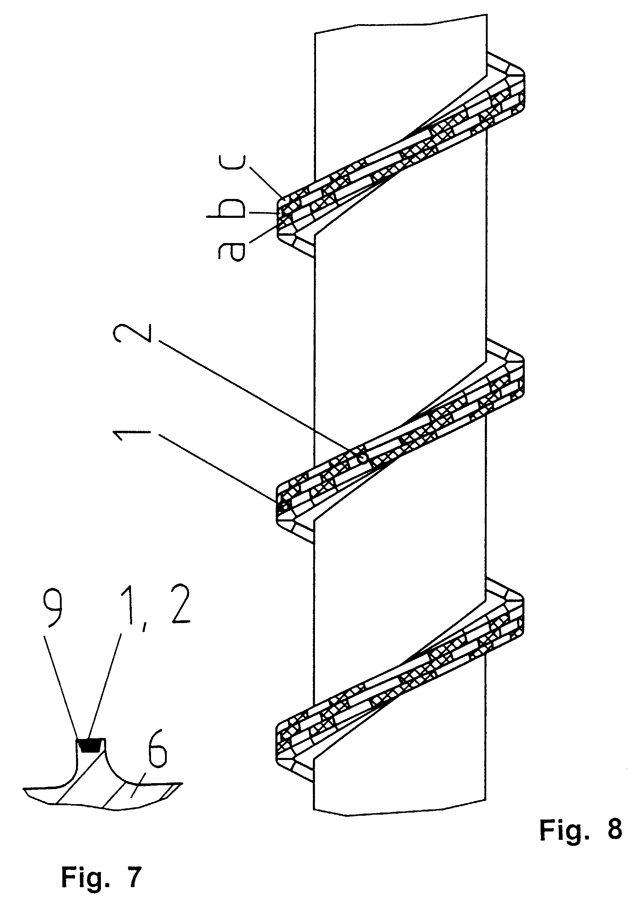

Bei der in der Fig. 7 gezeigten Ausführungsform sind die verschleißbeständigen und spannungsausgleichenden Bereiche 1, 2 in einer Nut 9 vorgesehen, die im Kopf des Schneckensteges 6 ausgebildet ist. Das bedeutet, daß sich an den Seiten der Bereiche 1, 2 das Grundmaterial des Schneckensteges 6 befindet. Zur Herstellung dieser Ausführungsformen werden abschnittsweise wechselnd der harte Werkstoff für die verschleißbeständigen Bereiche 1 und der zähe Werkstoff für die spannungsausgleichenden Bereiche 2 in die Nut 9 gefüllt.

Die Fig. 8 zeigt eine weitere Ausführungsform der Erfindung, bei der jeweils drei verschleißbeständige und spannungsausgleichende Bereiche 1, 2 nebeneinander und versetzt zueinander angeordnet sind. Selbstverständlich können auch nur jeweils zwei Bereiche 1, 2 oder auch mehr als drei Bereiche 1, 2 nebeneinander und versetzt zueinander angeordnet sein. Der Auftrag der Bereiche 1, 2 erfolgt in mehreren, parellel verlaufenden Arbeitsschritten a, b und c.

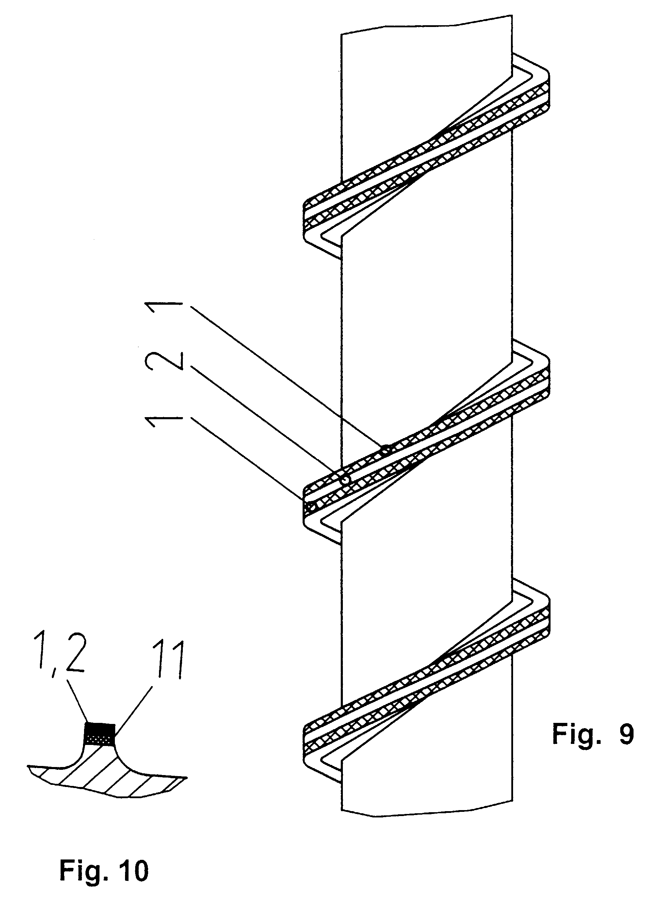

Bei der in der Fig. 9 gezeigten Ausführungsform verlaufen entlang des Schneckensteges 6 zwei verschleißbeständige Bereiche 1 parallel zu einem spannungsausgleichenden Bereich 2. Andere Kombinationsmöglichkeiten der verschleißbeständigen und spannungsausgleichenden Bereiche 1, 2 sind denkbar. Z.B. könnte ein verschleißbeständiger Bereich 1 zwischen zwei spannungsausgleichenden Bereichen 2 verlaufen.

In der Fig. 10 wird gezeigt, daß zwischen dem Schneckensteg 6 und den Bereichen 1, 2 eine Zwischenschicht 11 als Puffer- und Aufbauschicht verlaufen kann, die zusätzlich Spannungen, die beim Aufbringen der Bereiche 1, 2 oder während des Betriebes der Schnecke entstehen können, zusätzlich ausgleicht.

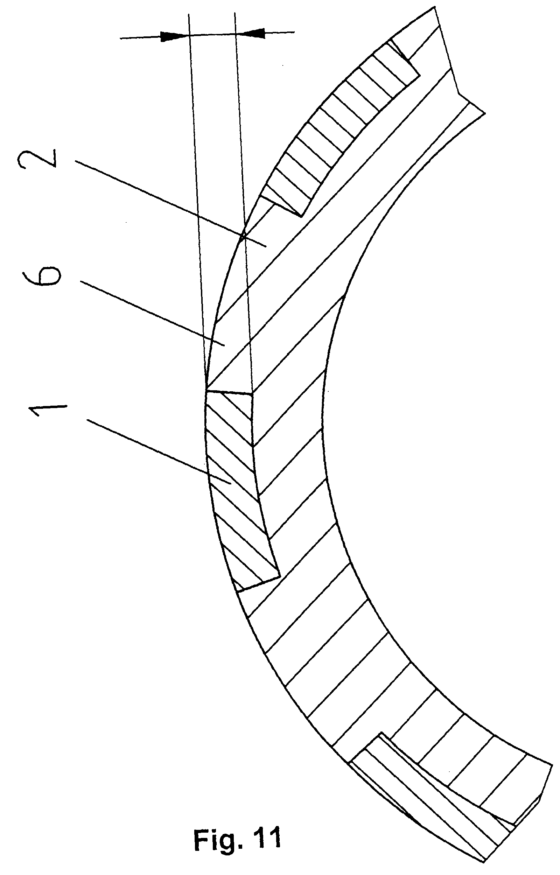

In der Fig. 11 ist eine weitere Ausführungsform gezeigt, bei der der gesamte Schneckensteg aus einem zähen Werkstoff hergestellt ist und somit den spannungsausgleichenden Bereich 2 bildet. In der Umfangsoberfläche des Schneckensteges 6, also im Schneckenstegkopf, sind Ausnehmungen, beispielsweise durch Fräsen, eingebracht, die mit einem harten, verschleißbeständigen Werkstoff ausgefüllt sind und somit die verschleißbeständigen Bereiche 1 bilden.

Obwohl die vorliegende Erfindung exemplarisch anhand von Schnecken für die Kunststoffverarbeitung beschrieben wurde, läßt sich die Erfindung auch auf andere Schneckenarten, wie z.B. Förder- oder Transportschnecken, übertragen, die einem starken Verschleiß unterliegen.

## Patentansprüche

1. Schnecke (5), insbesondere Extruder- oder Plastifizierschnecke, mit einem verschleißgeschützten Schneckensteg (6), **dadurch gekennzeichnet,** daß dieser verschleißgeschützte Schneckensteg (6) wenigstens einen verschleißbeständigen Bereich (1) und wenigstens einen spannungsausgleichenden Bereich (2) aufweist.

2. Schnecke (5) nach Anspruch 1, **dadurch gekennzeichnet,** daß mehrere verschleißbeständige und spannungsausgleichende Bereiche (1,2) des Schneckensteges (6) abschnittsweise wechselnd angeordnet sind.

3. Schnecke (5) nach Anspruch 1, **dadurch gekennzeichnet,** daß entlang des Schneckensteges (6) wenigstens ein verschleißbeständiger Bereich (1) parallel zu wenigstens einem spannungsausgleichenden Bereich (2) verläuft

4. Schnecke (5) nach Anspruch 1, **dadurch gekennzeichnet,** daß wenigstens zwei entlang des Schneckensteges (6) verlaufende Bereiche (1,2) nebeneinander und versetzt zueinander angeordnet sind.

5. Schnecke (5) nach wenigstens einem der vorstehenden Ansprüche, **dadurch gekennzeichnet,** daß die verschleißbeständigen Bereiche (1) aus harten Werkstoffen, insbesondere aus Stählen, Hartmetallen oder Nickellegierungen mit Zuschlägen von Molybdän, Chrom, Mangan, Silicium, Eisen und dergleichen, gebildet sind.

6. Schnecke (5) nach wenigstens einem der vorstehenden Ansprüche, **dadurch gekennzeichnet,** daß die spannungsausgleichenden Bereiche (2) aus zähen Werkstoffen, insbesondere aus austenitischen Stählen oder eisenfreien Werkstoffen, gebildet sind.

7. Schnecke (5) nach wenigstens einem der vorstehenden Ansprüche, **dadurch gekennzeichnet,** daß die verschleißbeständigen und spannungsausgleichenden Bereiche (1,2) als Schichten auf einem Kopf des Schneckensteges (6) ausgebildet sind.

8. Schnecke (5) nach Anspruch 7, **dadurch gekennzeichnet,** daß zwischen dem Schneckenstegkopf und den verschleißbeständigen und spannungsausgleichenden Schichten eine weitere Schicht (11) als Puffer- und Aufbauschicht vorgesehen ist.

9. Schnecke (5) nach Anspruch 8, **dadurch gekennzeichnet,** daß die weitere Schicht (11) aus einem metallischen Werkstoff besteht.

10. Schnecke (5) nach wenigstens einem der Ansprüche 1 bis 6, **dadurch gekennzeichnet,** daß die verschleißbeständigen und spannungsausgleichenden Bereiche (1,2) in einer Nut (9) angeordnet sind, die im Kopf des Schneckensteges (6) ausgebildet ist.

11. Schnecke (5) nach wenigstens einem der Ansprüche 1 bis 6, **dadurch gekennzeichnet,** daß der spannungsausgleichende Bereich der Schneckensteg (6) ist, in dessen Kopf mehrere Ausnehmungen (10) ausgebildet sind, in denen die verschleißbeständigen Bereiche (1) angeordnet sind.

12. Schnecke (5) nach wenigstens einem der vorstehenden Ansprüche, **dadurch gekennzeichnet,** daß die Schnecke (5) in zumindest einem Längenabschnitt zwei- oder mehrgängig ist.

13. Schnecke (5) nach wenigstens einem der vorstehenden Ansprüche, **dadurch gekennzeichnet,** daß in zumindest einem Längenabschnitt der Schnecke (5) eine Barrierezone vorgesehen ist.

14. Verfahren zum Herstellen einer Schnecke (5), insbesondere Extruder- oder Plastifizierschnecke, mit einem verschleißgeschützten Schneckensteg (6), bei dem wenigstens ein verschleißbeständiger Bereich (1) und wenigstens ein spannungsausgleichender Bereich (2) insbesondere durch Schweißen, Punktschweißen, Kleben oder Löten mit dem Schneckensteg (6) verbunden werden.

15. Verfahren nach Anspruch 14, **dadurch gekennzeichnet,** daß nach dem Verbinden wenigstens der Schneckensteg (6) durch Ionitrieren, Nitrieren, Härten, Vakuumhärten, Molybdänbeschichten oder Verchromen oberflächenbehandelt wird.

16. Verfahren nach wenigstens einem der Ansprüche 14 und 15, **dadurch gekennzeichnet,** daß im Kopf des Schneckensteges (6) eine Nut (9) ausgebildet wird, in der die verschleißbeständigen und spannungsausgleichenden Bereiche (1,2) angeordnet werden.

17. Verfahren nach Anspruch 16, **dadurch gekennzeichnet,** daß die Bereiche (1,2) durch abschnittsweise wechselndes Ausfüllen der Nut (9) mit harten und zähen Werkstoffen ausgebildet werden.

18. Verfahren nach wenigstens einem der Ansprüche 14 und 15, **dadurch gekennzeichnet,** daß der Schneckensteg (6) als spannungsausgleichender Bereich (2) aus dem zähen Werkstoff hergestellt wird und in den Kopf des Schneckensteges (6) Ausnehmungen (10), insbesondere durch Fräsen, eingebracht werden, in denen die verschleißbeständigen Bereiche (1) ausgebildet werden.

19. Verfahren nach Anspruch 18, **dadurch gekennzeichnet,** daß die verschleißbeständigen Bereiche (1) durch Ausfüllen der Ausnehmungen (10) mit dem harten Werkstoff ausgebildet werden.
